# EUROPÄISCHE PATENTSCHRIFT

(11) **EP 1 261 821 B1**
(45) Veröffentlichungstag und Bekanntmachung des Hinweises auf die Patenterteilung: **23.03.2005**
(21) Anmeldenummer: 01913771.0
(22) Anmeldetag: 25.01.2001
(51) Int. Cl.: F16K 1/00

(54) **THERMOSTATVENTIL FÜR HEIZKÖRPER**
THERMOSTAT VALVE FOR RADIATORS
SOUPAPE DE THERMOSTAT POUR RADIATEUR

(30) Priorität: 21.02.2000 DE 10007929
(43) Veröffentlichungstag der Anmeldung: 04.12.2002
(73) Patentinhaber: Honeywell Technologies Sarl, 1110 Morges (CH)
(72) Erfinder: LÖFFLER, Michael, 59519 Möhnesee (DE); KOTTEK, Günter, 44534 Lünen (DE)
(74) Vertreter: Fritz, Edmund Lothar, Dipl.-Chem.
(86) Internationale Anmeldenummer: PCT/EP2001/000804
(87) Internationale Veröffentlichungsnummer: WO 2001/063154

(56) Entgegenhaltungen:
- EP-A- 0 044 904
- DE-C- 4 318 816
- FR-A- 2 757 253

## Beschreibung

Die vorliegende Erfindung betrifft ein Thermostatventil für Heizkörper umfassend einen heizkörperseitig drehfest montierten Sockel und einen gegenüber diesem Sockel zur Einstellung einer gewünschten Temperatur verdrehbar angeordneten Griff, wobei ein Festanschlag im Griff vorgesehen ist und wobei parallel zur Längsachse des Thermostatventils verschiebbare Begrenzer zur Festlegung einer maximalen bzw. minimalen Drehstellung des Griffs vorgesehen sind und wobei sich im Bereich des Sockels eine Anzeigemarke befindet, die die auf einer Skala des Griffs aufgebrachten Markierungen entsprechend der gewünschten Drehstellung des Griffs und der Einstellung des Thermostatventils ablesbar macht.

Ein Thermostatventil für Heizkörper der eingangs genannten Art ist durch offenkundige Vorbenutzung der Firma Metallwerke Neheim Goeke & Co. GmbH sowie aus dem Prospekt vom 12.10.1988 betreffend den Thermostatkopf "thera 2" dieser Firma bekannt. Bei diesem bekannten Thermostatventil sind die Begrenzer kleine Metallstifte, die in Bohrungen des Sockels axial verschiebbar geführt sind und die beim Setzen des Begrenzers in korrespondierende Bohrungen im Griff einschiebbar sind. Diese Stifte sind jedoch so in der Bohrung des Sockels liegend angeordnet, dass sie von Hand nicht zugänglich sind. Das Setzen des Begrenzers durch axiales Verschieben ist daher nur durch Zuhilfenahme eines speziellen Werkzeugs möglich, welches teilweise in die Bohrung im Sockel eingreift und hinter den Stift greift, so dass dieser dann in die Bohrung im Griff verschoben werden kann. Diese Ausführungsart hat verschiedene Nachteile. Zum einen ist es relativ umständlich von der Handhabung her, wenn man den Begrenzer mit Hilfe des Werkzeugs setzen will. Außerdem ist das spezielle Werkzeug zum Setzen der Begrenzer ein separates Teil, so dass es vorkommen kann, dass das Werkzeug verloren geht, so dass der Benutzer die Begrenzer nicht mehr setzen kann oder bereits gesetzte Begrenzer nicht wieder aus der gesetzten Position entfernen kann, wenn eine andere Begrenzung des Drehwinkels gewünscht ist.

Ausgehend von diesem Stand der Technik ist es zwar grundsätzlich möglich, den Begrenzer mit einem radial gegenüber dem Sockel bzw. dem Griff vorstehenden Handhabungsteil zu versehen. Dazu muss man aber einen Schlitz im Sockel vorsehen, um den Begrenzer verschieben zu können. Ein solcher nach außen offener Schlitz wird bei einem modernen Thermostatventit als unschön empfunden, da er das ansonsten geschlossene Design von Sockel und gegenüber diesem verdrehbarem Griff stört. Außerdem bringt ein solcher Schlitz die Gefahr der Verschmutzung mit sich, wobei insbesondere Schmutzpartikel in das Innere des Thermostatventils gelangen und somit die Funktion beeinträchtigen können.

Die FR 2 757 253 A beschreibt ein Thermostatventil für Heizkörper mit einem Drehgriff und einem feststehenden Basisring. Der Basisring hat eine radial vorstehende Anzeigemarke und der Drehgriff weist eine konische Erweiterung im unteren Teil auf mit einer Skalierung. Weiterhin sind tastenförmige Begrenzer vorgesehen, wobei der Basisring einen Festanschlag unter der Anzeigemarke hat und die tastenförmigen Begrenzer in der Ausgangsstellung rechts und links von diesem Festanschlag positioniert werden. Außerdem sind zwei Endanschläge vorgesehen, die mit den tastenförmigen Begrenzern zusammenwirken bei der Festlegung der minimalen beziehungsweise maximalen Sollwerte. Wenn eine Sollwert-Begrenzung gewählt werden soll, wird zunächst der Drehgriff bis zum Anschlag gedreht, dann wird der tastenförmige Begrenzer, der innenseitig ein Federelement aufweist, radial einwärts gedrückt und so entriegelt. Dann wird der Begrenzer gedrückt gehalten und der Drehgriff bis zu dem gewünschten Sollwert als Begrenzung gedreht. Nach Loslassen der Begrenzertaste rastet der Anschlag ein, wodurch der neue Sollwert gesetzt ist. Auch bei dieser Lösung wird demnach die Einstellung der Sollwerte relativ umständlich vorgenommen. Außerdem ist es nicht möglich, die Begrenzer parallel zur Längsachse des Ventils zu verschieben, da zwischen dem feststehenden Basisring und dem Drehgriff nur ein Spalt vorhanden ist, der so schmal ist, dass ein radial nach innen ragender Steg des Begrenzers eben durch diesen Spalt passt.

Aus der EP 00 44 904 A2 ist bekannt, zur Sollwertbegrenzung Begrenzungsbleche in schlitzförmige Längslöcher in einem feststehenden Basisteil einzusetzen, die mit einer Längsrippe am Drehgriff zusammenwirken. Zur Veränderung der Sollwertbegrenzung müssen die Begrenzungsbleche im Basisteil umgesetzt werden.

Die DE 43 18 816 C1 offenbart eine Sicherungseinrichtung für einen Thermostaten, bei der mit Hilfe einer Sicherungshülse und einem Kupplungselement ein bestimmter Sollwert fest eingestellt werden kann, so dass ein Drehgriff nicht mehr relativ zum Thermostatgehäuse verdreht werden kann.

Die Aufgabe der vorliegenden Erfindung besteht darin, ein Thermostatventil für Heizkörper der eingangs genannten Art zu schaffen, das einerseits eine leichtere Handhabung beim Setzen des Begrenzers gewährleistet und dabei gleichzeitig einen nach außen offenen sichtbaren Schlitz für die Führung des Begrenzers vermeidet.

Die Lösung dieser Aufgabe liefert ein erfindungsgemäßes Thermostatventil für Heizkörper der eingangs genannten Gattung mit den kennzeichnenden Merkmalen des Hauptanspruchs.

Die erfindungsgemäße Lösung sieht vor, dass ein von einem Handhabungsteil des Begrenzers radial einwärts ragender Steg beim axialen Verstellen des Begrenzers innerhalb eines Schlitzes des Sockels bewegt wird, dass jedoch dieser Schlitz, wenn man von außen her auf den Thermostat schaut, unterhalb der Anzeigemarke liegt, die sich im Bereich des Sockels befindet und von dieser verdeckt wird. Der Begrenzer hat also einen Handhabungsteil, der radial nach außen vorsteht, so dass es möglich ist, den Begrenzer ohne Zuhilfenahme eines Werkzeugs in achsparalleler Richtung zu verschieben, wenn man diesen setzen will. Um die Verbindung dieses radial nach außen vorstehenden Handhabungsteils mit den beim Setzen des Begrenzers im inneren von Sockel und Griff wirksamen Teilen zu schaffen, verwendet man zwar erfindungsgemäß einen radial einwärts ragenden Steg, der diesen Handhabungsteil mit den inneren Teilen des Begrenzers verbindet und man sieht auch eine Art Führungsschlitz im Sockel vor, um die achsparallele Bewegung dieses Stegs zu ermöglichen. Dieser Schlitz zur Führung des Stegs des Begrenzers ist jedoch so angeordnet, daß er unterhalb der Anzeigemarke liegt. Damit ist dieser Schlitz praktisch von außen her nicht sichtbar. Außerdem ist der Schlitz dadurch auch wesentlich weniger anfällig gegen eindringende Schmutzpartikel. Das Thermostatventil kann so gestaltet werden, daß es im Bereich des Sockels und des an diesen angrenzenden Griff eine ästhetisch ansprechende geschlossene Designform beibehält.

Eine bevorzugte Weiterbildung der Erfindung sieht vor, daß der Begrenzer wenigstens eine Nut aufweist, die mit einer Verzahnung innerhalb des Griffs zusammenwirkt, derart, daß eine gegenseitige Führung beim achsparallelen Verschieben des Begrenzers und ein Formschluss zwischen Nut und Verzahnung gegeben ist. Grundsätzlich ist es alternativ aber auch möglich, eine anders geartete gegenseitige Führung von Begrenzer und Griff beim Verschieben des Begrenzers herzustellen. Beispielsweise könnte der Begrenzer selbst einen Zahn oder einen Vorsprung oder eine Anformung aufweisen, wobei dann der Griff eine dieser Anformung zugeordnete Führungsnut aufweisen könnte. Wichtig ist dabei nur, daß Begrenzer und Griff entsprechende Teile aufweisen, die beim axialen Verschieben wie es beim Setzen des Begrenzers erfolgt, ineinandergreifen, so daß dadurch die jeweils gewählte Position des Begrenzers im Griff die dann letztlich zu der entsprechenden Drehwinkelbegrenzung des Griffs führt, festgelegt ist. Ein Verschieben des Begrenzers gegenüber dem Griff in Umfangsrichtung ist dagegen in keinem Fall möglich. Vielmehr wird solange sich der Begrenzer in seiner Ausgangsposition in dem entsprechenden Depot im Sockel befindet, zunächst der Griff verdreht, um die gewünschte Drehwinkelbegrenzungsstellung festzulegen und dann wird der Begrenzer axial aus seiner ursprünglichen Position im Sockel in den Griff hinein verschoben bis er gesetzt ist.

Der Handhabungsteil des Begrenzers kann grundsätzlich irgendein radial vorstehender Teil sein, der genügend Angriffsfläche bietet für ein Verschieben des Begrenzers z.B. mit dem Daumen. Eine besonders vorteilhafte Variante der Erfindung sieht vor, daß der Handhabungsteil des Begrenzers etwa hammerkopfartig ausgebildet ist. Dieser Hammerkopf des Begrenzers ist also breiter und gegebenenfalls auch höher als der radial einwärts ragende Steg des Begrenzers, der die Verbindung zu den innenliegenden Teilen des Begrenzers, nämlich dem Begrenzungskörper herstellt.

Die Drehbegrenzung des Griffs ergibt sich bei gesetztem Begrenzer vorzugsweise durch Anschlag von Anschlagbereichen des Begrenzers, die sich an dem Begrenzungskörper befinden, an einem festen Anschlag des Sockels. Der Griff hat wie eingangs erwähnt wurde ebenfalls einen Festanschlag, der insbesondere dann wirksam wird, wenn kein Begrenzer gesetzt ist, da dann der zuvor genannte feste Anschlag des Sockels als Anschlag für den Festanschlag des Griffs dienen kann, oder aber der Festanschlag des Griffs kann dann bei ungesetzten Begrenzern auch an den Begrenzern anschlagen, wenn diese sich beispielsweise in einer Ausgangsposition jeweils beidseitig neben der Anzeigemarke befinden und wenn diese auch im ungesetzten Zustand soweit in den Griff hineinragen, daß sie mit dem Festanschlag des Griffs zusammenwirken. Vorzugsweise ist auch bei ungesetztem Begrenzer ein Verdrehen des Griffs gegenüber dem Sockel nur um weniger als den vollen Drehbereich von 360°C möglich.

Wie bereits erläutert wurde, ergibt sich die Anschlagfunktion des Begrenzers durch den Begrenzungskörper, der im inneren des Gehäuses des Griffs bzw. des Sockels angeordnet ist. Um diesen Begrenzungskörper mit dem radial außen vorstehenden Handhabungsteil zu verbinden, benötigt man den Steg (Verbindungssteg). Wenn man den Begrenzer gesetzt hat, dann befindet er sich in dem Griff und wenn dann der Griff verdreht wird, dreht sich der Begrenzer konsequenterweise mit dem Griff. Da der genannte Steg des Begrenzers nach außen ragt, muß folglich ein Schlitz am Umfang im Grenzbereich zwischen Griff und Sockel vorhanden sein, innerhalb dessen sich der Begrenzer beim Verdrehen des Griffs und mit diesem des gesetzten Begrenzers gegenüber dem Sockel bewegt. Es ist dabei bevorzugt, daß dieser Schlitz zwischen Griff und Sockel möglichst schmal ist, so daß auch der genannte Steg entsprechend schmal sein muß, so daß er sich beim Verdrehen des Griffs berührungsfrei innerhalb dieses Schlitzes bewegt. Da dieser Steg so schmal wie möglich ausgebildet werden sollte, es genügt, diesen so stark auszuführen, daß er den mechanischen Beanspruchungen beim axialen Verschieben des Begrenzers genügt, bietet es sich an, den Handhabungsteil des Begrenzers höher auszubilden als den Steg, damit er ausreichend Angriffsfläche für die Handhabung bietet. Auch der Begrenzungskörper ist vorzugsweise höher als dieser Steg, wobei besonders bevorzugt ist, daß der Steg mit dem Begrenzungskörper mit Abstand vom oberen und vom unteren Ende des Begrenzungskörpers verbunden ist. In diesem Fall ragt bei gesetztem Begrenzer ein Teil des Begrenzungskörpers in den Griff, der Steg befindet sich in Höhe des Schlitzes zwischen Griff und Sockel und ein Teil des Begrenzungskörpers kann auch von dem Steg nach unten noch in den Aufnahmeraum des Sockels ragen. Gleichzeitig kann der Begrenzungskörper auch so ausgebildet sein, daß er bei nicht gesetztem Begrenzer überwiegend in dem Aufnahmeraum des Sockels aufgenommen ist, aber dennoch mit einem oberen Teil noch in den Griff hineinragt und damit noch als Anschlag gegenüber einem Festanschlag des Griffs wirken kann, um die maximale Drehposition des Griffs zu begrenzen.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: eine Ansicht eines erfindungsgemäßen Thermostatkopfes, der bereichsweise geschnitten ist;
- Fig. 2: eine entsprechende Ansicht wie in Fig.1, jedoch mit gesetztem Begrenzer;
- Fig. 3a: eine Ansicht auf den Thermostatkopf mit zwei Begrenzern im Bereich der Anzeigemarke;
- Fig. 3b: eine entsprechende Ansicht des Thermostatkopfes von Fig. 3a, jedoch teilweise aufgeschnitten;
- Fig. 4a: einen Horizontalschnitt durch den Sockel des Thermostatkopfs von Fig. 1;
- Fig. 4b: einen ähnlichen Schnitt wie in Fig. 4a jedoch mit anders positioniertem Begrenzer;
- Fig. 5: eine perspektivische Ansicht eines der Begrenzer;
- Fig. 6: einen weiteren Längsschnitt durch einen erfindungsgemäßen Thermostatkopf im Bereich der Anzeigemarke;
- Fig. 7: einen Querschnitt durch den Thermostatkopf im Bereich des Griffs mit positioniertem Begrenzer.

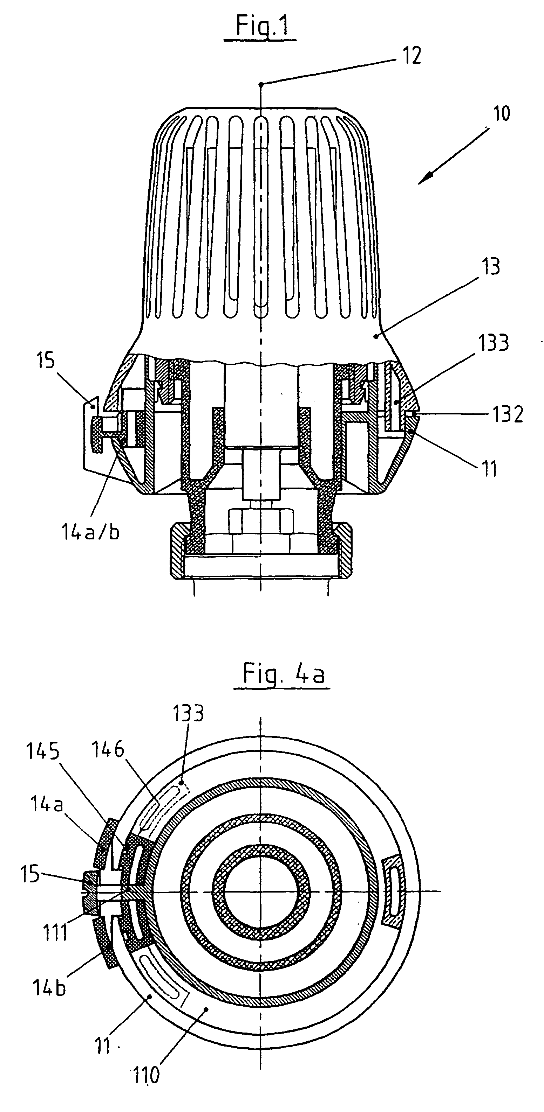

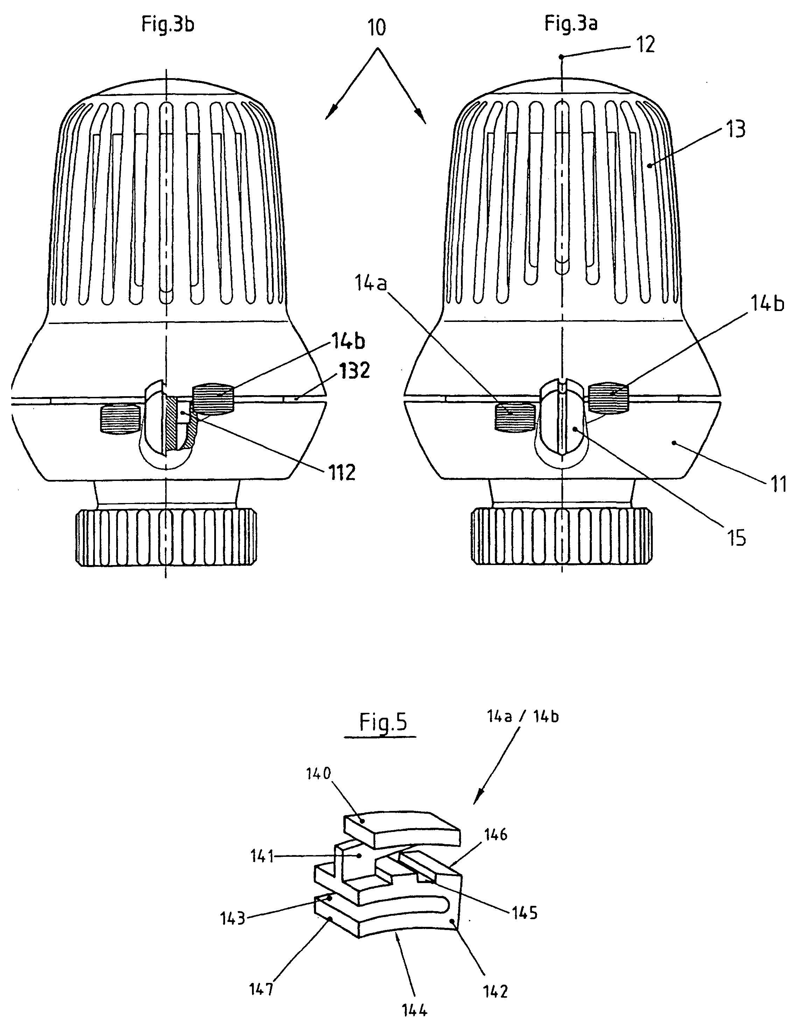

Zunächst wird auf Fig. 1 Bezug genommen.
Die Darstellung zeigt einen erfindungsgemäßen Thermostatkopf, der insgesamt mit 10 bezeichnet ist. Dieser Thermostatkopf 10 umfaßt anschlußseitig zum Ventil hin einen drehfest montierten Sockel 11 und einen mit diesem Sockel 11 um eine Längsachse 12 drehbar verbundenen Griff 13 zur Einstellung der gewünschten Temperatur. Die zu dieser Einstellung der gewünschten Temperatur mögliche Verdrehung des Griffs 13 kann auf einen bestimmten Drehwinkelbereich begrenzt werden, wenn man erreichen will, daß die einem bestimmten Temperaturwert entsprechende Maximaleinstellung oder Minimaleinstellung nicht überschritten beziehungsweise unterschritten wird. Um den Drehwinkelbereich des Griffs 13 gegenüber dem Sockel 11 in beide Drehrichtungen begrenzen zu können auf einen maximalen Einstellwert und einen minimalen Einstellwert sind zwei in Fig. 3a dargestellte Begrenzer 14a, 14b vorgesehen. Diese Begrenzer sind so gezeichnet, daß der eine Begrenzer 14a sich in seiner Ausgangsstellung befindet, wohingegen sich der andere Begrenzer 14b in seiner gesetzten Position befindet. Um den Begrenzer aus der Ausgangsstellung links in Fig. 3 in die gesetzte Position rechts in Fig. 3 zu bewegen, wird der Begrenzer 14a, 14b von Hand in axialer Richtung, das heißt achsparallel zur Achse 12 des Thermostatkopfes verschoben.

In einer Grundstellung, die in Fig. 3a dargestellt ist, liegen die beiden Begrenzer 14a und 14b in Umfangsrichtung gesehen jeweils rechts und links neben einer Anzeigemarke 15. Der zur Veranschaulichung hier nicht gesetzte linke Begrenzer 14a ist in einem Depot in dem Sockel 11 gelagert. Dagegen ist der axial verschobene gesetzte Begrenzer 14b in Fig. 3 a/b aus dem Depot in dem Sockel 11 heraus in den Griff 13 verschoben. In dieser Position markiert der Begrenzer 14b einen Anschlag, der eine maximale Drehstellung des Griffs 13 gegenüber dem Sockel 11 markiert. Aufbau und Funktion der Begrenzer 14a, 14b werden später anhand der Fig. 1, 2 und 4 noch näher erläutert.

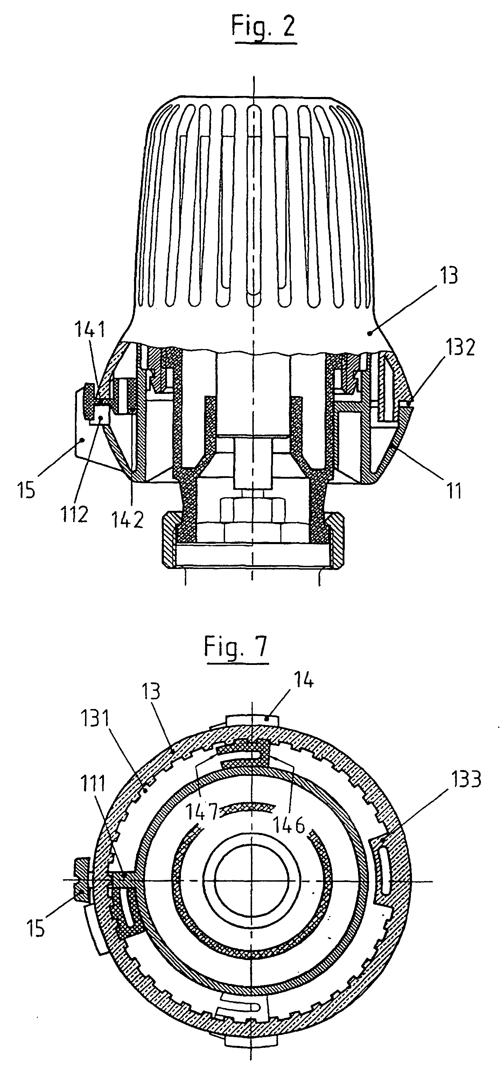

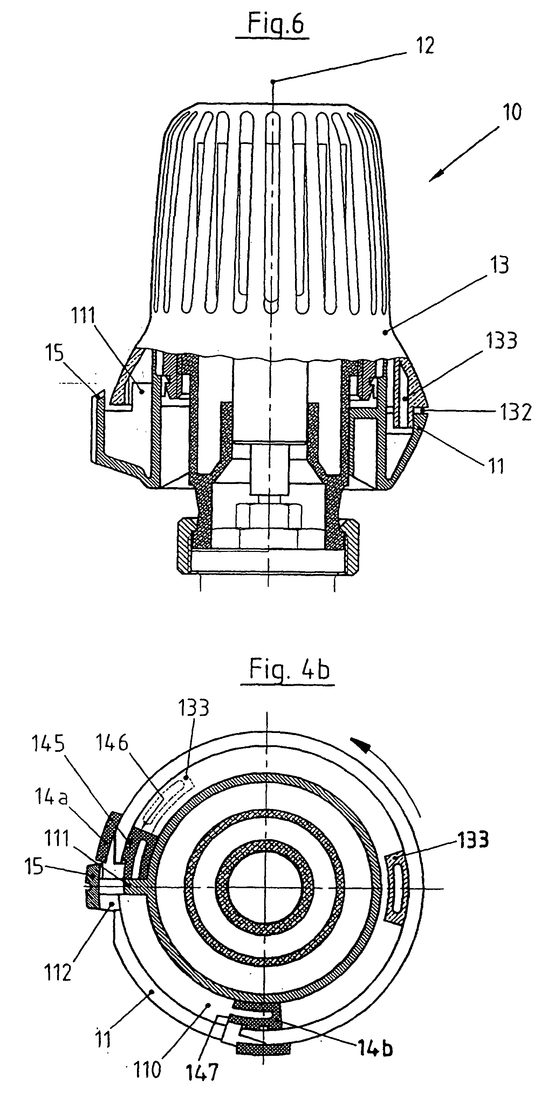

Ein Begrenzer 14a/b ist für sich genommen perspektivisch noch einmal in Fig. 5 dargestellt. Der Begrenzer 14 hat zunächst einen, wie man aus Fig. 2 erkennt, radial gegenüber dem Sockel 11 vorstehenden Handhabungsteil 140, der wie man Fig. 5 bzw. Fig. 1 entnehmen kann etwa hammerkopfartig ausgebildet ist. Von diesem Handhabungsteil 140 erstreckt sich in radialer Richtung in Bezug auf den Thermostatkopf gesehen nach innen ein Verbindungssteg 141, der mit dem eigentlichen im montierten Zustand im inneren des Sockels beziehungsweise Griffs liegenden Begrenzungskörper 142 verbunden ist. Dieser Begrenzungskörper 142 ist einseitig mit einem Schlitz 143 versehen, um das Einpassen des Begrenzers 14a/b in den entsprechenden Aufnahmeraum 110 im Sockel 11 (siehe Fig. 4a) bei der Montage besser zu ermöglichen. Die Innenfläche 144 des Begrenzers ist entsprechend der Krümmung der Innenwandung des Aufnahmeraums 110 konkav gewölbt. An der dem Handhabungsteil 140 zugewandten Außenseite weist der Begrenzer 14a/b wenigstens eine Nut 145 auf, die mit einer Verzahnung 131 innerhalb des Griffs 13 zusammenwirkt, wie später noch näher erläutert wird.

Aus Fig. 4a erkennt man, wie zwei Begrenzer 14a, 14b jeweils rechts und links von der Anzeigemarke 15 liegen, die Teil des Sockels 11 ist. Fig. 2 zeigt die obere gesetzte Position eines der Begrenzer 14a/b. Fig. 1 zeigt dagegen einen der Begrenzer 14a/b in der unteren ungesetzten Position bei der dieser sich in seiner Lagerposition innerhalb des Depots in dem Sockel 11 befindet. Hinter dem Begrenzer 14 erkennt man die Anzeigemarke 15. Weiterhin erkennt man in Fig. 2 das teilweise aufgeschnittene untere Ende des Griffs 13 und man sieht, daß der Verbindungssteg 141 durch einen Schlitz 132 hindurch radial nach innen ragt, der sich zwischen dem unteren Ende des Griffs 13 und dem oberen Ende des Sockels 11 befindet. Dieser Schlitz 132 ist relativ schmal.

Fig. 2 zeigt den Begrenzer 14b in der gesetzten Position und der Vergleich mit Fig. 1, die den Begrenzer 14b in der ungesetzten Position zeigt, verdeutlicht, daß der Begrenzer 14b axial oder achsparallel nach oben verschoben wurde. In der Position gemäß Fig. 2 wird dabei der Begrenzungskörper 142 in den Griff 13 hinein verschoben. Durch die Verzahnung 131 im Griff (siehe Fig. 7) und die Nut 145 im Begrenzer ergibt sich eine formschlüssige Verbindung zwischen Begrenzer 14b und Griff 13 in der gesetzten Position gemäß Fig. 2. Einer der Zähne der Verzahnung 131 greift dabei in die Nut 145 des Begrenzers 14b ein. Wird nun nachfolgend der Griff 13 gegenüber dem Sockel 11 verdreht, dann wird der Begrenzer 14b mitgenommen. Der Griff 13 kann dann soweit gegenüber dem Sockel 11 verdreht werden, bis eine Anschlagfläche 147 (siehe Fig. 5 und auch Fig. 4a, b) an einem Anschlag 111 im Sockel im Bereich der Anzeigemarke 15 anschlägt. Der in Fig. 5 dargestellte Begrenzer hat demnach zwei Anschlagsbereiche, nämlich einmal die Anschlagfläche 146, die dem Festanschlag 133 im Griff zugewandt ist und die dann als Anschlag wirksam ist, wenn der Begrenzer 14a nicht gesetzt ist. Dann ist der maximale Drehwinkel von 360° - x gegeben, der durch den Festanschlag 133 des Griffs bestimmt wird und die Ausgangsposition der Begrenzer 14a, 14b gemäß Fig. 4a.

Wird hingegen der Begrenzer 14a/b gesetzt, wird dadurch der Winkelabstand zwischen dem Begrenzer 14a/b und dem Festanschlag 133 des Griffs bestimmt. Je größer dieser Winkelabstand zwischen einem gesetzten Begrenzer, z.B. 14b in Fig. 4b und dem Festanschlag 133 in Fig. 4 ist, desto geringer wird der maximal mögliche Drehwinkel des Griffs 13 gegenüber dem Sockel 11.

An der anderen Seite hat der Begrenzer 14a, b Anschlagbereiche 147 (siehe Fig. 5), die bei gesetztem Begrenzer als Anschlag gegenüber dem Festanschlag 111 des Sockels wirken, also gegenüber Verdrehung im Uhrzeigersinn gemäß der Darstellung von Fig. 4b für den Begrenzer 14b.

Wird der andere Begrenzer 14a in Fig. 4b ebenfalls gesetzt, dann verändert sich dessen Winkelposition gegenüber dem Festanschlag 133 des Griffs, so daß der Drehwinkel des Griffs 13 gegenüber dem Sockel 11 auch in die andere Drehrichtung begrenzt wird. Dadurch kann man maximale beziehungsweise minimale Dreheinstellungen des Thermostatventiles erzielen.

Da Fig. 4a zwei ungesetzte Begrenzer in der Ausgangsposition zeigt, wobei der Thermostatkopf durch den Sockel 11 geschnitten wurde, kann hier der Griff 13 maximal gegenüber dem Sockel 11 verdreht werden und der Festanschlag 133 ist zur verdeutlichung dieser maximalen Drehpositionen zweimal jeweils gestrichelt eingezeichnet. Bei Fig. 4b ist der eine Begrenzer 14b gesetzt, so daß seine Position gegenüber dem Festanschlag 133 festliegt, wohingegen der andere Begrenzer 14a ungesetzt ist, so daß der Griff gegenüber diesem verdreht werden kann, bis der Festanschlag 133 an diesem anschlägt, was durch zusätzliche gestrichelte Darstellung des Festanschlags 133 angedeutet ist. In Fig. 7 ist ein weiter oben in Fig. 2 liegender Schnitt durch den Griff 13 gezeigt mit einem gesetzten Begrenzer, der in die Verzahnung 131 eingreift. Man erkennt hier den am Griff 13 angeformten Festanschlag 133. Ein weiterer gesetzter Begrenzer ist zur Veranschaulichung in einer anderen Position durch dünne Linien dargestellt.

In Fig. 6 erkennt man die Ausbildung des Sockels 11 im Bereich der Anzeigemarke 15 mit dem dort liegenden Festanschlag 111, der in dem Schnitt von Fig. 1 hinter dem Begrenzer 14a/b liegt.

In Fig. 3b ist die Anzeigemarke 15 teilweise weggeschnitten, so daß man den hinter dieser liegenden vertikalen achsparallelen Führungsschlitz 112 (s. auch Fig. 2) erkennen kann, innerhalb dessen der Steg 141 des Begrenzers (s. Fig. 5) bei dessen Setzen bewegt wird. Beim Verdrehen des Griffs 13 gegenüber dem Sockel 11 wird der Steg 141 des gesetzten Begrenzers 14b dagegen in dem schmalen Umfangsschlitz 132 geführt.

## Patentansprüche

1. Thermostatventil für Heizkörper, umfassend einen heizkörperseitig drehfest montierten Socke (11) und einen gegenüber diesem Sockel (11) zur Einstellung einer gewünschten Temperatur verdrehbar angeordneten Griff (13), wobei ein Festanschlag im Griff (13) vorgesehen ist und wobei parallel zur Längsachse des Thermostatventils verschiebbare Begrenzer (14a,14b) zur Festlegung einer maximalen bzw. minimalen Drehstellung des Griffs vorgesehen sind und wobei sich im Bereich des Sockels (11) eine Anzeigemarke (15) befindet, die die auf einer Skala des Griffs aufgebrachten Markierungen entsprechend der gewünschten Drehstellung des Griffs (13) und der Einstellung des Thermostatventils ablesbar macht, **dadurch gekennzeichnet, dass** ein von einem Handhabungsteil (14) radial einwärts ragender Steg (141) des Begrenzers (14a, 14b) beim axialen Verstellen des Begrenzers innerhalb eines Schlitzes (112) des Sockels (11) bewegt wird, wobei der Schlitz (112) radial von außen her auf den Thermostatkopf (10) gesehen hinter der Anzeigemarke (15) liegt und von dieser verdeckt wird.

2. Thermostatventil für Heizkörper nach Anspruch 1, **dadurch gekennzeichnet, daß** der Begrenzer (14a/b) wenigstens eine Nut (145) aufweist, die mit einer Verzahnung (131) innerhalb des Griffs (13) zusammenwirkt, derart, daß eine gegenseitige Führung beim achsparallen Verschieben des Begrenzers (14a/b) und ein Formschluß zwischen Nut (145) und Verzahnung (131) gegeben ist.

3. Thermostatventil für Heizkörper nach Anspruch 1 oder 2, **dadurch gekennzeichnet, daß** die Drehbegrenzung des Griffs (13) bei gesetztem Begrenzer (14a/b) durch Anschlag von Anschlagbereichen (147) des Begrenzers an einem festen Anschlag (111) des Sockels (11) im Bereich der Anzeigemarke (15) gegeben ist.

4. Thermostatventil für Heizkörper nach einem der Ansprüche 1 bis 3, **dadurch gekennzeichnet, daß** der Begrenzer (14a, b) eine konkav gewölbte Innenfläche (144) aufweist, die im nicht gesetzten Zustand an einer entsprechend gewölbten Innenwandung eines Aufnahmeraumes (110) des Sockels (11) anliegt.

5. Thermostatventil für Heizkörper nach einem der Ansprüche 1 bis 4, **dadurch gekennzeichnet, daß** in einer Ausgangsposition, in der Anschlagbereiche (147) des Begrenzers (14a, b) an dem festen Anschlag (111) des Sockels (11) anliegen, der radial aus dem Sockel (11) vorstehende Handhabungsteil (140) neben der Anzeigemarke (15) liegt.

6. Thermostatventil für Heizkörper nach einem der Ansprüche 1 bis 5, **dadurch gekennzeichnet, daß** der Handhabungsteil (140) des Begrenzers (14a, b) etwa hammerkopfartig ausgebildet ist.

7. Thermostatventil für Heizkörper nach einem der Ansprüche 1 bis 6, **dadurch gekennzeichnet, daß** der Steg (141) mit dem in dem Aufnahmeraum (110) des Sockels aufgenommenen Begrenzungskörper (142) mit Abstand vom oberen und vom unteren Ende des Begrenzungskörpers (142) verbunden ist.

8. Thermostatventil für Heizkörper nach einem der Ansprüche 1 bis 7, **dadurch gekennzeichnet, daß** der sich von dem Steg (141) nach oben hin erstreckende Teil des Begrenzungskörpers (142) bei gesetztem Begrenzer (14a, b) sich in das Innere des Griffs (13) hinein erstreckt.

9. Thermostatventil für Heizkörper nach einem der Ansprüche 1 bis 8, **dadurch gekennzeichnet, daß** der Steg (141) des Begrenzers (14a, b) bei gesetztem Begrenzer sich durch einen relativ schmalen Schlitz (132) hindurch in radialer Richtung erstreckt, wobei der Schlitz (132) zwischen dem unteren Ende des Griffs (13) und dem oberen Ende des Sockels (11) angeordnet ist.

## Claims

1. Thermostatic valve for radiators, comprising a plinth (11) mounted fixedly in terms of rotation on the radiator side and a grip (13) arranged rotatably with respect to the plinth (11) in order to set a desired temperature, a fixed stop being provided in the grip (13), and limiters (14a, 14b) displaceable parallel to the longitudinal axis of the thermostatic valve being provided for defining a maximum and a minimum rotary position of the grip, and there being located in the region of the plinth (11) an indicator mark (15) which makes it possible to read off the markings applied on a scale of the grip according to the desired rotary position of the grip (13) and the setting of the thermostatic valve, **characterized in that** a web (141) of the limiter (14a, 14b), the said web projecting radially inwards from a handling part (14), is moved within a slot (112) of the plinth (11) during the axial adjustment of the limiter, the slot (112) lying behind the indicator mark (15), as seen radially from outside toward the thermostat head (10), and being concealed by said indicator mark.

2. Thermostatic valve for radiators according to Claim 1, **characterized in that** the limiter (14a/b) has at least one groove (145) which cooperates with a toothing (131) within the grip (13), in such a way as to give rise to mutual guidance during the axial parallel displacement of the limiter (14a/b) and to a positive connection between the groove (145) and the toothing (131).

3. Thermostatic valve for radiators according to Claim 1 or 2, **characterized in that**, with the limiter (14a/b) set, the rotational limitation of the grip (13) is brought about by the abutment of stop regions (147) of the limiter against a fixed stop (111) of the plinth (11) in the region of the indicator mark (15).

4. Thermostatic valve for radiators according to one of Claims 1 to 3, **characterized in that** the limiter (14a, b) has a concavely curved inner face (144) which in the non-set state, bears against a correspondingly curved inner wall of a reception space (110) of the plinth (11).

5. Thermostatic valve for radiators according to one of Claims 1 to 4, **characterized in that**, in an initial position in which stop regions (147) of the limiter (14a, b) bear against the fixed stop (111) of the plinth (11), the handling part (140) projecting radially from the plinth (11) lies next to the indicator mark (15).

6. Thermostatic valve for radiators according to one of Claims 1 to 5, **characterized in that** the handling part (140) of the limiter (14a, b) is of approximately hammerhead-like design.

7. Thermostatic valve for radiators according to one of Claims 1 to 6, **characterized in that** the web (141) is connected to the limiting body (142), received in the reception space (110) of the plinth, at a distance from the upper and from the lower end of the limiting body (142).

8. Thermostatic valve for radiators according to one of Claims 1 to 7, **characterized in that**, with the limiter (14a, b) set, that part of the limiting body (142) which extends upwards from the web (141) extends into the interior of the grip (13).

9. Thermostatic valve for radiators according to one of Claims 1 to 8, **characterized in that**, with the limiter set, the web (141) of the limiter (14a, b) extends in the radial direction through a relatively narrow slot (132), the slot (132) being arranged between the lower end of the grip (13) and the upper end of the plinth (11).

## Revendications

1. Soupape de thermostat pour radiateur, comprenant un socle (11) monté fixe en rotation du côté du radiateur et un bouton (13) disposé de manière à pouvoir tourner par rapport à ce socle (11) pour l'ajustement d'une température souhaitée, une butée fixe étant prévue dans le bouton (13) et des limiteurs (14a, 14b) déplaçables parallèlement à l'axe longitudinal de la soupape de thermostat, destinés à fixer une position de rotation maximale et minimale du bouton étant prévus, et un repère indicateur (15) se trouvant dans la région du socle (11), lequel permet de lire les indications prévues sur une échelle du bouton en fonction de la position de rotation souhaitée du bouton (13) et de l'ajustement de la soupape de thermostat, **caractérisée en ce qu'**une nervure (141) du limiteur (14a, 14b) saillant radialement vers l'intérieur depuis une partie de manipulation (14), est déplacée lors du décalage axiale du limiteur à l'intérieur d'une fente (112) du socle (11), la fente (112) se trouvant derrière le repère indicateur (15), vu radialement depuis l'extérieur sur la tête du thermostat (10), et étant dissimulée par celui-ci.

2. Soupape de thermostat pour radiateur selon la revendication 1, **caractérisée en ce que** le limiteur (14a/b) présente au moins une rainure (145) qui coopère avec une denture (131) à l'intérieur du bouton (13) de telle sorte qu'un guidage mutuel soit obtenu lors d'un glissement parallèle à l'axe du limiteur (14a/b) et que l'on obtienne un engagement par coopération de forme entre la rainure (145) et la denture (131).

3. Soupape de thermostat pour radiateur selon la revendication 1 ou 2, **caractérisée en ce que** la limitation de la rotation du bouton (13) lorsque le limiteur (14a/b) est mis en place est réalisée par la venue en butée des zones de butée (147) du limiteur contre une butée (111) du socle (11) dans la région du repère indicateur (15).

4. Soupape de thermostat pour radiateur selon l'une quelconque des revendications 1 à 3, **caractérisée en ce que** le limiteur (14a, b) présente une face interne de courbure concave (144) qui s'applique, dans l'état non mis en place, contre une paroi interne de courbure correspondante d'un espace de réception (110) du socle (11).

5. Soupape de thermostat pour radiateur selon l'une quelconque des revendications 1 à 4, **caractérisée en ce que** dans une position de départ, dans laquelle les régions de butée (147) du limiteur (14a, b) s'appliquent contre la butée fixe (111) du socle (11), la partie de manipulation (140) saillant radialement hors du socle (11) est située à côté du repère indicateur (15).

6. Soupape de thermostat pour radiateur selon l'une quelconque des revendications 1 à 5, **caractérisée en ce que** la partie de manipulation (140) du limiteur (14a, b) est réalisée approximativement en forme de tête rectangulaire.

7. Soupape de thermostat pour radiateur selon l'une quelconque des revendications 1 à 6, **caractérisée en ce que** la nervure (141) est connectée au corps de limitation (142) reçu dans l'espace de réception (110) du socle à distance de l'extrémité supérieure et de l'extrémité inférieure du corps de limitation (142).

8. Soupape de thermostat pour radiateur selon l'une quelconque des revendications 1 à 7, **caractérisée en ce que** la partie du corps de limitation (142) s'étendant vers le haut depuis la nervure (141) s'étend dans l'intérieur du bouton (13) lorsque le limiteur (14a, b) est mis en place.

9. Soupape de thermostat pour radiateur selon l'une quelconque des revendications 1 à 8, **caractérisée en ce que** la nervure (141) du limiteur (14a, b) s'étend dans la direction radiale à travers une fente relativement étroite (132) lorsque le limiteur est mis en place, la fente (132) étant prévue entre l'extrémité inférieure du bouton (13) et l'extrémité supérieure du socle (11).
